# EUROPEAN PATENT APPLICATION

(11) **EP 4 656 996 A1**
(43) Date of publication of application: **03.12.2025**
(21) Application number: 24020176.4
(22) Date of filing: 29.05.2024
(51) Int. Cl.: F27D 1/16, F27D 11/00, F27D 1/00, F27D 99/00, B01J 19/02

(54) **AN APPARATUS FOR ARRANGING A FURNACE COMPONENT IN A WALL OF A FURNACE AND/OR FOR REMOVING A FURNACE COMPONENT FROM A WALL OF A FURNACE**

(71) Applicant: Selas-Linde GmbH, 82049 Pullach (DE)
(72) Inventor: Heinle, Dominik, 82049 Pullach (DE); Fohlmeister, Christian, 82049 Pullach (DE); Can, Ismail, 82049 Pullach (DE); Mayerhofer, Matthias, 82049 Pullach (DE)
(74) Representative: Lu, Jing

(57) **Abstract**

The present invention relates to an apparatus (200) for arranging a furnace component (150) in a wall (110) of a furnace and/or for removing a furnace component (150) from a wall (110) of a furnace, comprising: a frame element (210) configured to be moved relative to the wall (110) of the furnace, particularly towards the wall (110) and away from the wall (110), particularly in a horizontal direction, particularly in a direction perpendicular to an outer plane of the wall (110) of the furnace; and a shaft element (220) configured to be arranged at a number of predetermined positions at the frame element (210) such that the correspondingly arranged shaft element (220) can rotate around its axis, wherein the shaft element (220) is further configured to carry the furnace component (150) such that the furnace component (150) can rotate around the shaft element (220).

## Description

The present invention relates to an apparatus for arranging a furnace component in a wall of a furnace and/or for removing a furnace component from a wall of a furnace as well as to a method for arranging a furnace component in a wall of a furnace and to a method for removing a furnace component from a wall of a furnace.

### Background of the invention

In a number of processes in the chemical industry, reactors or furnaces are used in which one or more reactants are passed through heated tubes where they are catalytically or non-catalytically reacted or heated up. The heating serves in particular to overcome the activation energy required for the chemical reaction taking place and, in the case of endothermic reactions, to provide the necessary energy for the chemical reaction. The reaction can proceed endothermically overall or, after overcoming the activation energy, exothermically.

Examples of such processes are steam cracking, various reforming processes, in particular steam reforming, dry reforming (carbon dioxide reforming), mixed reforming processes, processes for the dehydrogenation of alkanes and the like. In steam cracking, the tubes are guided through the reactor or furnace in the form of coils, which have at least one reverse bend in the furnace, whereas in steam reforming, tubes are typically used which run through the furnace without a reverse bend. The present invention may also be used in connection with so-called "millisecond" or "single-pass" reactors which are characterized by very low dwell times.

Further applications of the present invention are furnaces for performing a reverse water gas shift (RWGS) reaction of carbon dioxide and hydrogen to form carbon monoxide and water, dehydrogenation of oxygenates such as a reaction of methanol to formaldehyde and hydrogen, cleavage of ammonia to yield gaseous nitrogen and hydrogen, dehydrogenation of so-called liquid organic hydrogen carriers (LOHC) as known to the skilled person, and reforming of methanol and glycerol (as far as not already included by the term "reforming" used above).

The present invention is suitable for all embodiments of furnaces used for such processes as well as for furnaces for heating a process medium. Purely by way of illustration, reference is made to the articles "Ethylene", "Gas Production" and "Propene" in Ullmann's Encyclopedia of Industrial Chemistry, for example the publications dated April 15, 2009, DOI: 10.1002/14356007.a10_045.pub2, December 15, 2006, DOI: 10.1002/14356007.a12_169.pub2, and June 15, 2000, DOI: 10.1002/14356007.a22_211.

The tubes of corresponding furnaces are conventionally heated by using burners. The tubes are, for this purpose, guided through a combustion chamber in which the burners are also arranged. However, it is also possible to support or replace the burners in corresponding furnaces by electrical heating means with no or reduced local carbon dioxide emissions. In addition to direct electrical heating, in which current is applied to the tubes themselves, for example in a known star (point) circuit, and other types of heating, which are not explained in detail here, concepts also exist in particular for so-called indirect electrical heating. Such indirect electrical heating can e.g. be carried out using electrically operated radiative heating units ("radiant heaters") suitable for heating to the high temperatures required for the reactions mentioned, such heating units being arranged within the furnace in such a way that they are not in direct contact with the reaction tubes. The heat transfer takes place predominantly or exclusively in the form of radiant heat.

In these kinds of indirectly heated furnaces, some furnace components, e.g. heating units, can have a limited service life, such that the corresponding furnace components need to be maintained or replaced in short time intervals. It can oftentimes be very elaborate to remove corresponding furnace components from the furnace to be replaced, repaired, or maintained, and to arrange the new, repaired, or maintained furnace component in the furnace. Heating units for example might have to be installed in an exactly vertical position to ensure correct positioning in the furnace construction. It is therefore desirable to provide an improved manner of arranging a furnace component in a furnace and for removing a furnace component from a furnace.

### Disclosure of the invention

The present invention relates to an apparatus for arranging a furnace component in a wall of a furnace and/or for removing a furnace component from a wall of a furnace as well as to a method for arranging a furnace component in a wall of a furnace and to a method for removing a furnace component from a wall of a furnace according to the independent claims. Embodiments and advantages form the subject-matter of the dependent claims and of the subsequent description.

The furnace can particularly comprise a number of walls defining an interior volume of the furnace. In at least one of these walls one or several furnace components can be provided. Particularly, these furnace components can be provided as heating means for heating the interior volume of the furnace. The apparatus according to the present invention is particularly configured to remove or disassemble a corresponding furnace component from the respective wall of the furnace, e.g. for repair, maintenance or replacement. The apparatus is further particularly configured to arrange or assembly a new, repaired, or maintained furnace component in the respective furnace wall.

The apparatus comprises a frame element or frame structure configured to be moved relative to the respective wall of the furnace, particularly towards the wall and away from the wall, particularly in a horizontal direction, particularly in a direction perpendicular to a plane or an outer plane of the wall of the furnace. Expediently, the furnace component can be mounted to this frame element, especially be arranged within the frame element. By moving the frame element with the mounted furnace component, the furnace component can then be removed from or provided in the furnace wall. The frame element can especially be provided as a welded structure, e.g. made of U-profiles, which particularly forms a rigid frame. Dimension of the frame element, in particular a height and width, can expediently correspond to or be determined in dependence of the dimensions of the furnace wall and/or of the furnace component. For example, the height of the frame element can correspond to the height of one furnace component or to the height of several furnace components or the height of the entire furnace of furnace wall.

The apparatus further comprises a shaft element configured to be rotatably arranged at a number of predetermined positions at the frame element such that the correspondingly arranged shaft element can rotate around its axis or length axis. The shaft element is further configured to rotatably carry the furnace component such that the furnace component can rotate around the shaft element. The shaft element can expediently be coupled with respective suspension elements provided at the furnace component, e.g. with (lifting or suspending) eyelets. The predetermined positions can especially be determined corresponding to or in dependence of positions of several furnace components in the furnace wall. The shaft element can therefore be arranged at a particular position at the frame element in order to assemble or disassemble a particular furnace component at a particular position in the furnace wall. At the respective predetermined positions, mounting elements, e.g. holes, bores, or bearings, etc., can be provided in the frame element for coupling the shaft element with the frame element or for supporting the shaft element by means of the frame element or for fastening the shaft element to the frame element.

By means of the shaft element, the furnace component can be mounted rotatably relative to the frame element, especially with two degrees of freedom. Firstly, the shaft itself can rotate relative to the frame element and secondly the furnace component can rotate around the shaft element. Therefore, the furnace component mounted to the frame element can especially be allowed to automatically align according to its centre of mass. The correspondingly aligned or suspended furnace component can then easily be transported by moving the frame element. Further, the furnace component can easily be aligned relative to the furnace wall, in particular in such a position and such an orientation as needed for being assembled in the furnace wall.

The present invention further relates to a method for arranging a furnace component in a wall of a furnace by means of an embodiment of the apparatus according to the present invention.

According to this method, the furnace component is arranged within or relative to the frame element. For example, the furnace component can be lifted to a respective position within the frame element by means of lifting device, e.g. a crane. The furnace component is suspended on the shaft element and the shaft element is arranged at one of the number of predetermined positions at the frame element. For example, the shaft element can firstly be coupled with the respective suspension elements of the furnace component, e.g. with eyelets of the furnace component. The shaft element with the suspended furnace component can then be arranged at the respective predetermined position and can be coupled with the respective mounting elements of the frame element, e.g. holes, bores, or bearings. When the shaft element and the frame element carry the load of the furnace component, the lifting device can be removed. The suspended furnace component can now expediently align itself according to its the centre of gravity.

The suspended furnace component is aligned relative to the wall of the furnace by rotating the furnace component around the shaft element and/or by rotating the shaft element relative to the frame element, against gravity. When the required position and orientation of the furnace component relative to the furnace wall is achieved, the furnace component can expediently be fixed or locked relative to the shaft element. Further, the shaft element can be fixed or locked relative to the frame element.

The frame element with the correspondingly aligned furnace component is moved towards the wall of the furnace such that the furnace component is thereby arranged in the wall of the furnace. Since the furnace component is already correctly aligned relative to the furnace, the component can easily be moved into the furnace wall. When arranged in the furnace wall, the furnace component is fixed to the wall, e.g. by fastening corresponding fastening means like screws, bolts, brackets, flange connections, etc.

When the furnace component is fixed to the furnace wall, the shaft element is removed from the frame element and from the furnace component, e.g. by pulling the shaft element out of the suspension elements of the furnace component, e.g. the eyelets, and out of the mounting elements of the frame element, e.g. the holes, bores, bearings etc. The frame element is removed from the wall of the furnace.

The present invention further relates to a method for removing a furnace component from a wall of a furnace by means of an embodiment of the apparatus according to the present invention.

According to this method, the frame element is moved towards the wall of the furnace such that the furnace component is arranged within the or relative to the frame element. The shaft element is arranged at or coupling with the furnace component, e.g. by coupling the shaft element with the respective suspension elements of the furnace component, e.g. the eyelets, and mounting. The shaft element is arranged at one of the number of predetermined positions at the frame element, e.g. by coupling the shaft element with the respective mounting elements of the frame element, e.g. the holes, bores, bearings etc. Expediently, the furnace component can be fixed or locked relative to the shaft element and the shaft element can be fixed or locked relative to the frame element

The furnace component is unfixed from the wall of the furnace, e.g. by loosening or unfastening respective fastening means like screws, bolts, brackets, flange connections, etc. The frame element and thereby the furnace component are removed from the wall of the furnace. After the furnace component is completely removed from the furnace wall, a lifting device, e.g. a crane, can be coupled with the furnace component. The shaft element is removed from the furnace component and from the frame element. Expediently, the lifting device can now carry the load of the furnace component. The furnace component is removed from the frame element, expediently by means of the lifting device.

Advantages and embodiments of the apparatus according to the present invention and of the methods according to the present invention shall arise from the present description in an analogous manner.

The apparatus according to the present invention is therefore provided as an auxiliary assembly structure allowing to easily and flexibly assemble or disassemble the furnace component. In particular, the present invention allows to easily and flexibly align the furnace component relative to the furnace wall for assembly or disassembly.

Conventionally, for the disassembly and assembly of a furnace component, e.g. a heating unit, a crane and load handling devices such as ropes, chains and slings can be used, which can be attached to the lifting eyes of the furnace component. As the centre of gravity of the respective furnace component is usually not in the plane of the lifting points, the furnace component can tilt or rotate around the axis of the lifting eyes during the lifting process. This tilting or rotation is oftentimes compensated for by counterweights, which is usually not part of the furnace steel construction, but which might be needed to prevent the furnace component from tilting or rotating during the lifting process. This counterweight can be attached to the furnace component, before the furnace component is arranged in the furnace and removed again from the furnace.

For example, for conventionally disassembling a respective furnace component, all platforms, e.g. with railings and gratings, between a trolley track support and the furnace component to be disassembled might need to be dismantled and lowered to a lower level for temporary storage. In front of the furnace component, there can be a steel construction support used to reinforce the furnace steel construction, which might need to be dismantled. The counterweight can then be attached to the furnace component. To do this, the counterweight can be lifted with a crane and fixed to the lifting eyes of the furnace component, e.g. with bolts. All connections between the furnace component and the furnace steel structure can then be loosened and the module carefully pulled out.

For example, for conventionally assembling a new or repaired furnace component, the counterweight can be attached to the furnace component e.g. by fixing it to the lifting eyes of the furnace component, e.g. with bolts. The furnace component with the counterweight can then be lifted with a crane and set down on a lower platform. The furnace component with the counterweight can then be attached to a trolley on a trolley beam, pulled up and set down on an upper flange of another furnace component below. The furnace component can then be pushed into its final position and all connecting screws can be inserted and tightened. The counterweight can then be dismantled, placed on a lower platform and lifted away with the crane. Finally, the dismantled platforms, e g. with railings and gratings, and a steel construction support for reinforcing the furnace steel structure can must be reassembled.

Therefore, for the disassembly and assembly of a furnace component in a conventional manner, space required by the counterweight can be high, such that either a large maintenance area might need to be planned or such that other system components such as pipelines and neighbouring platforms might also need to be dismantled. Costs and effort for disassembly and assembly can therefore be high. When the furnace component needs to be replaced frequently, as it can e.g. be the case for heating units, maintenance costs can be driven up considerably.

In contrast to that, the present invention greatly simplifies assembly and disassembly of the furnace component. Costs and effort can be reduced. In particular, no counterweight is needed, which can yield considerable time and space savings. Several furnace components can be assembled or disassembled in parallel, which can yield considerable time and costs savings. Shorter assembly and disassembly times for maintenance work can be achieved. Risks of accidents at work and risks of injury during the assembly and disassembly steps can be reduced.

According to an embodiment, the apparatus comprises at least one carrier element and at least one trolley element. Each of these carrier elements is especially provided as a beam or bar and is configured to be arranged, mounted, or fixed directly or indirectly to the wall of the furnace. For example, the carrier elements can be mounted directly to the furnace wall or to other steel structure components of the furnace such as beams, or walkways etc. Particularly, each carrier element is arranged such that a length axis of the respective carrier element is oriented perpendicular or at least essentially perpendicular to the plane or outer plane of the furnace wall. Expediently, two carrier elements are provided, especially at two opposing sides of the furnace wall. Particularly, one trolley element is provided for each of the carrier elements. The at last one trolley element is configured to be arranged at the at least one carrier element such that the at least one trolley element can be moved along the at least one carrier element. The trolley elements can therefore be moved in horizontal direction, perpendicular to the outer plane of the wall of the furnace. The frame element is configured to be fixed to the at least one trolley element. Therefore, the frame element can be moved relative to the wall of the furnace by means of the at least one carrier element and the at least one trolley element. The carrier elements can especially be provided as extension beams, expediently as temporary, horizontal rails that can be firmly connected to the furnace structure, wherein the trolley elements can particularly be moved horizontally on these extension beams. The carrier elements can be permanently attached to the furnace structure, e.g. permanently bolted to the furnace structure. The carrier elements can also be temporarily attached to the furnace, e.g. by means of temporary clamping elements provided at different heights.

According to an embodiment of the method for arranging the furnace component in the furnace wall, prior to the step of arranging the furnace component within the frame element, the at least one carrier element is arranged at or relative to the wall of the furnace, i.e. directly or via another structure, the at least one trolley element is arranged at the at least one carrier element, and the frame element is fixed to the at least one trolley element. The carrier and trolley elements can expediently be attached temporarily to the furnace structure. After the step of removing the frame element from the wall of the furnace, the at least one carrier element can be removed from the wall or the respective structure of the furnace. For this purpose, the frame element can e.g. be removed from the at least one trolley element, the at least one trolley element can e.g. be removed from the at least one carrier element, and then the at least one carrier element can e.g. be removed from the wall or the respective structure of the furnace. It is for example also possible to remove the entire assembly of the at least one carrier element, the at least one trolley element, and the frame element altogether from the furnace wall, i.e. without removing the frame element from the at least one trolley element and without removing the at least one trolley element from the at least one carrier element. After having assembled the furnace component, the carrier and trolley elements can easily and flexibly be removed from the furnace structure.

According to an embodiment of the method for removing the furnace component from the furnace wall, prior to the step of moving the frame element towards the wall of the furnace, the at least one carrier element is arranged at or relative to the wall of the furnace, the at least one trolley element is arranged at the at least one carrier element, and the frame element is fixed to the at least one trolley element. After the step of removing the furnace component from the frame element, the at least one carrier element can be removed from the wall or the respective structure of the furnace. For example, the frame element can be removed from the at least one trolley element, the at least one trolley element can be removed from the at least one carrier element, and then the at least one carrier element can be removed from the wall or the respective structure of the furnace. The assembly of the at least one carrier element, the at least one trolley element, and the frame element can also be removed from the furnace wall altogether. Also for the disassembly of the furnace component, the carrier and trolley elements can temporarily be attached to the furnace structure and can easily and flexibly be removed from the furnace structure.

According to an embodiment, the apparatus comprises a cart element configured to be moved relative to the wall of the furnace, particularly towards the wall and away from the wall, particularly in horizontal direction parallel to the outer plane of the furnace wall. The carrier element is configured to be coupled with the cart element, expediently such that the carrier element can be moved relative to the wall of the furnace by means of the cart element. For example, a lifting element or hoisting element can be provided to lift or hoist the carrier element in order to couple the carrier element with the cart element. The cart element can for example be fixed via suitable means, e.g. via additional trolley elements, on rails in a way that it can move in horizontal direction parallel to the furnace wall. These rails can e.g. be fixed below and/or above suitable steel structure elements, e.g. walkways. The cart element can expediently be fixed in a way that the external centre of gravity of the furnace component does not tilt the cart element or frame element.

According to an embodiment, the apparatus further comprises at least one first fixing element or fastening element or anti-rotation lock element configured to rotationally fix or lock the shaft element relative to the frame element and/or at least one second fixing element or fastening element anti-rotation lock element configured to rotationally fix or lock the furnace component relative to the shaft element. By means of these fixing elements, the position and orientation of the furnace component can expediently be fixed, e.g. when the furnace component to be arranged is aligned in a desired manner relative to the furnace wall.

According to an embodiment of the method for arranging the furnace component in the furnace wall, the shaft element is fixed or locked relative to the frame element by means of the at least one first fixing element before the step of aligning the furnace component relative to the wall of the furnace. With the furnace component still being suspended rotatable relative the shaft element, the furnace component can then be aligned relative to the furnace wall. After aligning the furnace component relative to the wall of the furnace, the correspondingly aligned furnace component may be fixed or locked relative to the shaft element by means of the at least one second fixing element.

According to an embodiment of the method for removing the furnace component from the furnace wall, the shaft element is fixed or locked relative to the frame element by means of the at least one first fixing element and/or the furnace component is fixed or locked relative to the shaft element by means of the at least one second fixing element prior to the step of unfixing the furnace component from the wall of the furnace. This way, the furnace component can expediently not rotate and possibly collide with the furnace wall or other components while being pulled out of the furnace wall. After the furnace component is completely removed from the furnace wall, the first and/or second fixing elements can be unfixed or unlocked again.

According to an embodiment, the at least one first fixing element and/or the at least one second first fixing element comprise a nut and a lock-nut. For example, corresponding pairs of nut and lock-nut of the first fixing elements can be provided on both sides of the frame element, e.g. on two opposing beams of the frame element. Corresponding pairs of nut and lock-nut of the second fixing elements can e.g. be provided for each suspension element of the furnace component, e.g. for each eyelet of the furnace component. It is also possible that the first and second fixing elements can comprise further elements or other element, e.g. a ratchet wheel construction.

Alternatively, or additionally, according to an embodiment, the at least one first fixing element and/or the at least one second first fixing element comprise a clamp element. For example, by means of the clamping element(s), the furnace component and the frame element can be clamped together, thereby rotationally fixing the furnace component and thereby further fixing the furnace component in a specific vertical position.

According to an embodiment, the shaft element is configured to be coupled with suspension elements provided at the furnace component in order to carry the furnace component such that the furnace component can rotate around the shaft element. The shaft element can especially comprise one or several bearings for supporting the furnace component, wherein these bearings can particularly be coupled with the respective suspension elements of the furnace component. The suspension elements can for example be provided as eyelets provided at an outer side of the furnace component. Expediently, two or more eyelets are provided such that the furnace component can safely be carried by the shaft element. The furnace component can especially comprise further suspension elements, e.g. further eyelets, e.g. such that lifting device, e.g. a crane, can be coupled with these further elements in order to lift the furnace component into the frame element and/or in order to remove the furnace component from the frame element.

According to an embodiment, the apparatus is configured to arrange and/or remove an electrical heating unit provided as the furnace component. This electrical heating unit is especially configured for electrically heating the interior volume of the furnace and can electrically be operated to radiate thermal energy for heating the furnace interior to a corresponding temperature, e.g. required for performing a chemical process or for heating a process medium to a predetermined temperature. The electrical heating unit can particularly be provided as a modular unit, which can comprise an actual heating element or heating means as well as other elements, e.g. for insulation, for mounting etc. A heating unit of that kind can have a limited service life, wherein frequent maintenance, repair, or replacement might be required. The invention can therefore particularly be used in order to facilitate maintenance, repair, or replacement of heating units of that kind.

The electrical heating unit can e.g. comprise a heating element, an insulation element and/or a panel element. The heating element can particularly be provided as the actual heating means for heating the interior of the furnace. For example, the heating element can be an electrical heating wire or a heating material, e.g. FeCrAl, SiC or MoSi2. The insulation element can expediently be provided for insulating the interior of the furnace from the exterior environment. The panel element can expediently be provided as a cover or shrouding of the exterior surface of the corresponding furnace wall and can e.g. be provided as a steel plate. The suspension elements, especially in form of eyelets, can especially be provided at an outer side of this panel element. The electrical heating unit can further comprise other elements, e.g. electrical wirings and connection means. For example, the heating unit can further comprise welded-on stiffening ribs, expediently for stiffening the respective heating unit against wind loads, etc.

The furnace or process furnace is particularly provided for performing a chemical process, i.e. a process for carrying out a chemical reaction, and/or for heating a process medium. For this purpose, tubes or reaction tubes (in the following generally "tubes") to be heated can be provided in the interior volume or chamber or process chamber of the furnace such that one or more reactants can be passed through the correspondingly heated tubes, where they are catalytically or non-catalytically reacted. It is also possible to pass a process medium to be heated through the correspondingly heated tubes. The furnace can particularly be provided for performing a steam cracking process, various reforming processes, in particular steam reforming, dry reforming (carbon dioxide reforming), mixed reforming processes, processes for the dehydrogenation of alkanes and the like. The furnace can particularly be a cracking furnace, a reforming furnace, a direct reduced iron (DRI) furnace etc.

The furnace particularly comprises a number of walls, e.g. side walls, a front-end wall, a back-end wall, a top wall and a bottom wall. These walls define or enclose the interior volume of the furnace, in which tubes to be heated can be provided. At least one wall of the number of walls particularly comprises a frame structure and at least one furnace component is expediently provided in or inserted into the frame structure. The frame structure particularly comprises a number of beams or bars connected with each other, expediently a number of massive bars and beams arranged horizontally, vertically and/or diagonally and connected with each other in order to form a load-bearing frame structure. These beams or bars especially define or enclose a number of recesses, wherein the furnace components can be provided.

Expediently, several furnace components can be provided in a vertical column being arranged on top each other and neighbouring each other vertically or being at least partly separated by a horizontal part (e.g. beam or bar) of the frame structure. Expediently, several furnace components can be provided in a horizontal row being arranged next to each other and neighbouring each other horizontally or being at least partly separated by a vertical part (e.g. beam or bar) of the frame structure. Particularly, a multitude of furnace components can be provided in an array of multiple rows and columns. Expediently, several walls of the furnace can comprise correspondingly arranged furnace components, especially arranged in rows and/or columns. For example, each one of a pair of opposing side walls can comprise corresponding furnace components. Further, each side wall of the furnace can comprise corresponding furnace components. However, it is also possible that only one wall comprises corresponding furnace components.

The furnace components can e.g. comprise elements, which are needed for operating the furnace. For example, the furnace components can comprise heating means for heating the interior volume of the furnace, electrical wiring, sensors, etc. The furnace components can e.g. be equivalent or identically constructed. However, the furnace components can also be constructed individually and differently from each other.

Expediently, each furnace component can be provided as an interchangeable, exchangeable or replaceable unit or module. If necessary, e.g. during maintenance or in case of a defect, the corresponding furnace component can individually be replaced by a respective spare part.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows a furnace according to the prior art in a sectional side view.
- Fig. 2: schematically shows an embodiment of an apparatus according to the present invention in different views a to d.

### Detailed description of the drawing

In the figures, identical reference signs refer to identical or equivalent elements.

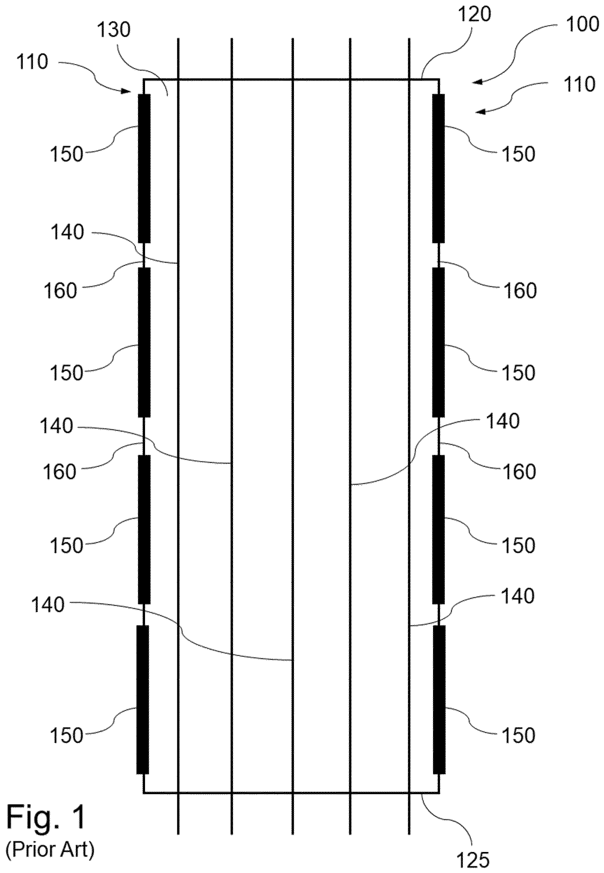

Fig. 1 shows an embodiment of a furnace 100 according to the prior art. The furnace 100 or process furnace is provided for performing a chemical process, e.g. a steam cracking process, a reforming process etc. The furnace 100 can also be provided for heating a process medium. For example, the furnace 100 can be provided as a cracking furnace, a reforming furnace, a direct reduced iron (DRI) furnace etc.

The furnace 100 comprises several walls, which define and enclose an interior volume or process chamber 130. For example, the furnace can comprise four side walls 110, wherein only two of these side walls are shown in Fig. 1, as well as top wall 120 and a bottom wall 125.

A number of tubes or reaction tubes 140 are provided in the process chamber 130. One or more reactants can be passed through these tubes 140, where they are catalytically or non-catalytically reacted. In order to overcome an activation energy of the corresponding chemical reaction, the tubes 140 shall be heated to a predetermined temperature. It is also possible to pass one or more process media to be heated thought the tubes 140, wherein the tubes 140 are heated to a predetermined temperature.

For this purpose, electrical heating units 150 are provided in one or several of the furnace walls, for example in each of the side walls 110. Each of the sidewalls 110 comprises a frame structure 160, wherein the electrical heating units 150 are provided in this frame structure 160 as furnace components. This frame structure 160 can comprise a number of vertically arranged beams, e.g. steel beams, and a number of horizontally arranged beams, e.g. steel beams, and a number of diagonally arranged beams, e.g. steel beams connected with each other to form a load-bearing frame structure. These beams define or enclose a number of recesses, wherein the heating units 150 as furnace components can be provided in these recesses.

For example, each of the side walls 110 can comprise several electrical heating units 150 arranged in an array of vertical columns and horizontal rows. As exemplarily shown in Fig. 1, four electrical heating units 150 can be provided in a vertical column arranged on top each other.

The heating unit 150 can have a limited service life such frequent maintenance, repair, or replacement can be required. Therefore, each electrical heating unit 150 is provided as an interchangeable, exchangeable or replaceable unit or module, such that each heating unit 150 can individually be replaced by a respective spared part if necessary, e.g. for maintenance or in case of a defect,

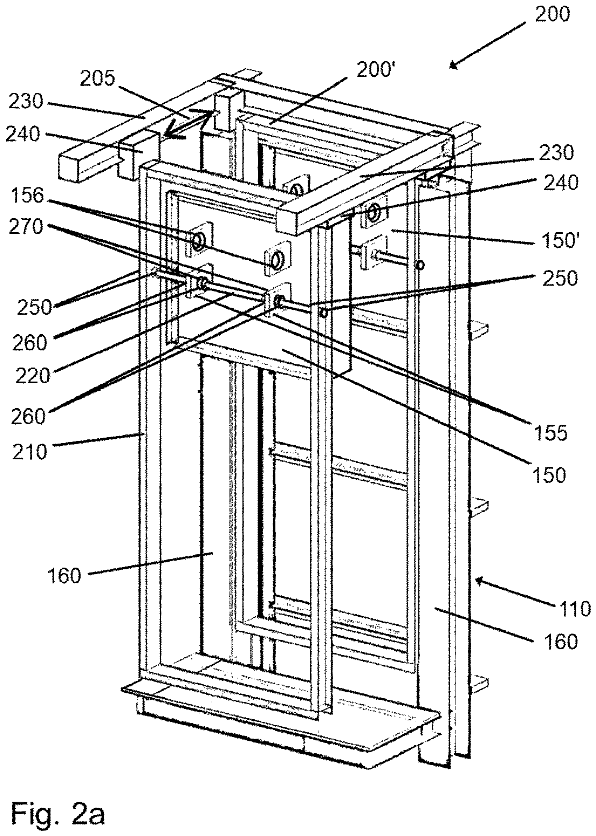

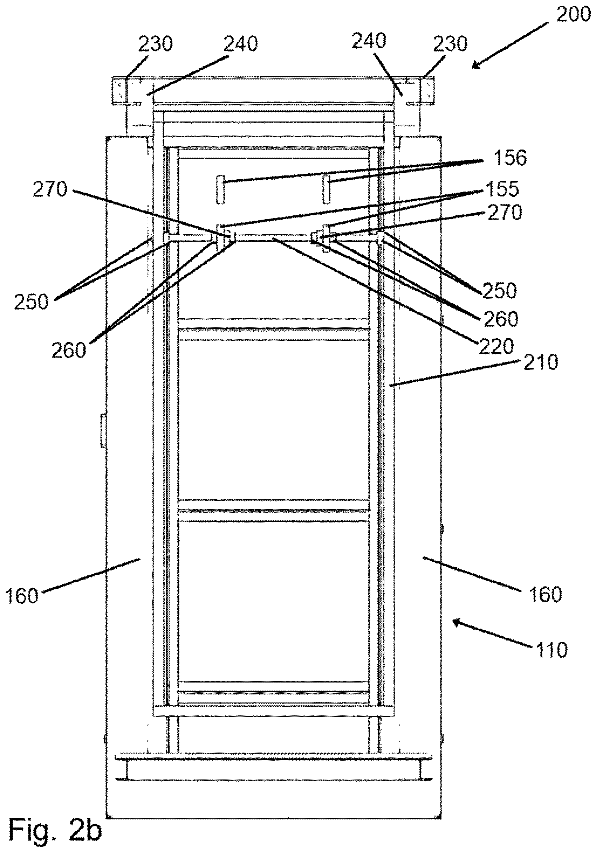

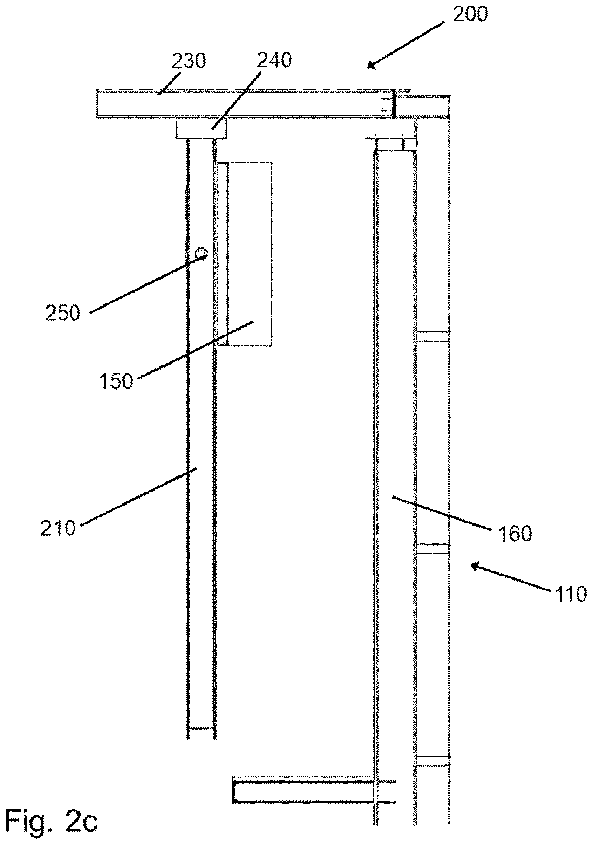

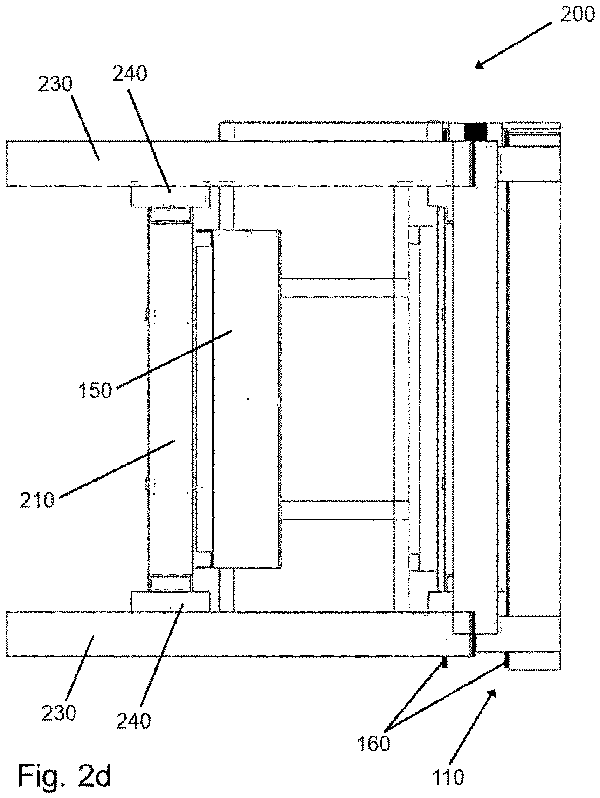

The present invention provides a possibility to easily and flexibly arrange furnace components, in particular the heating units 150, in a respective furnace wall 110 and to remove furnace components, in particular the heating units 150, from a respective furnace wall 110, as shall now be explained with reference to Fig. 2.

An apparatus 200 according to an embodiment of the present invention is schematically shown in Fig. 2a in a perspective view, in Fig. 2b in a front view, in Fig. 2c in a side view, and in Fig. 2d in a top view.

The apparatus 200 comprises a frame element 210 configured to be moved relative to the respective wall 110 of the furnace 100, particularly towards the wall 110 and away from the wall 110 in a horizontal direction perpendicular to an outer plane of the wall 110, indicated by reference sign 205.

In order to move the frame element 210, the apparats 200 can comprise at least one carrier element 230 and at least one trolley element 240. The carrier elements 230 are configured to be arranged at the wall 110 of the furnace. For example, these carrier elements 230 can comprise two beams or bars, which can be attached to the frame structure 160 of the respective furnace wall 110. The trolley elements 240 are configured to be arranged at the carrier elements 230 such that the trolley elements 240 can be moved along the at carrier elements 230. For example, one trolley element 240 can be provided for each of the carrier elements 230. The frame element 210 is configured to be fixed to the at least one trolley element 240, such that the frame element 210 can be moved relative to the wall 110 of the furnace 100 by means of the carrier elements 230 and the trolley elements 240.

The carrier elements 230 can for example be provided as two extension beams, e.g. as temporary, horizontal rails that can firmly connected to the furnace 100. A cart element can be provided for moving the carrier elements 230 relative to the furnace wall, e.g. in order to transport the carrier elements 230 to a respective position, at which the carrier elements 230 shall temporarily be connected to the furnace 100. This cart element can for example be fixed via suitable means, e.g. via additional trolley elements, on rails in a way that it can move in horizontal direction parallel to the furnace wall 110. These rails can e.g. be fixed below and/or above suitable steel structure elements, e.g. walkways.

The trolley elements 240 can be moved horizontally on the extension beams 230. The two extension beams 230 can either permanently be bolted to the main steel structure 160 of the furnace wall 110 or be attached at different heights using a temporary clamping construction.

The frame element 210 can for example be a welded construction made of U-profiles, which forms a rigid frame and which can rigidly be connected to the trolley elements 240. The height of the rigid frame 210 can e.g. correspond to the height of one heating unit 150 or to the height of several heating units 150 or the height of the entire furnace 100.

The apparatus further comprises a shaft element 220 configured to be arranged at a number of predetermined positions at the frame element 210 such that the correspondingly arranged shaft element 220 can rotate around its axis. For example, mounting elements like holes, bores, or bearings can be provided at these respective predetermined positions, wherein the shaft element 220 can be coupled with these mounting elements.

The shaft element 220 is further configured to carry the heating unit 150 such that the heating unit 150 can rotate around the shaft element 220. For this purpose, the shaft element 220 can e.g. be coupled with suspension elements 155 provided at an outer side surface of the heating unit 150. These suspension elements 155 can e.g. be provided as eyelets. The shaft element 220 can especially comprise bearings 270 for supporting the heating unit 150, e.g. one bearing 270 for each of the eyelets 155. The heating unit 150 can comprise further suspension elements 156, e.g. further eyelets, e.g. such that lifting device, e.g. a crane, can be coupled with these further eyelets 156. For example, four lifting eyes can be provided at the heating unit, two eyelets 155 to be coupled with the shaft element 220 and two further eyelets 156 e.g. for a lifting device.

At least one first fixing element, fastening element, or anti-rotation lock element 250 is provided for rotationally fixing or locking the shaft element 220 relative to the frame element 210. At least one second fixing element, fastening element, or anti-rotation lock element 260 is provided for rotationally fixing or locking the heating unit 150 relative to the shaft element 220. For example, each of the first and second fixing elements 250, 260 can comprise a nut and a lock-nut. The fixing elements 250, 260 can for example also comprise a clamp element in order to clamp the heating unit 150 and the frame element 210 together.

When the shaft element 220 is coupled with the heating unit 150 and with the frame element 210, the heating unit 150 can easily be moved out of and away from the furnace wall 110 or towards and into the furnace wall 110. Fig. 2a shows the apparatus 200 in a first position, wherein the heating unit 150 is positioned away from the furnace wall 110. Fig. 2a further shows the apparatus 200' in a second position, wherein the heating unit 150 is positioned in the respective furnace wall 110.

The apparatus 200 is therefore provided as an auxiliary assembly structure allowing to easily and flexibly assemble or disassemble the heating unit 150. With the shaft element 220 being able to rotate relative to the frame element 210 and with the heating unit 150 being able to rotate relative to the shaft element 220, the heating unit 150 can be allowed to automatically align itself to its centre of mass and the heating unit 150 can easily be aligned relative to the furnace wall 110, in particular in such a position and such an orientation as needed for being assembled in the furnace wall 110.

By means of the apparatus 200, the heating unit 150 can be arranged in the respective furnace wall 110 according to an embodiment of a method of the present invention. For this purpose, the carrier elements 230 are provided at the furnace wall, e.g. by means of the cart element, the trolley elements 240 are provided at the respective carrier elements 230, and the frame element 210 is fixed to the trolley elements 240. The heating unit 150 is then arranged within the frame element 210. For this purpose, the heating unit 150 can be attached to a lifting device, e.g. a crane, by means of the eyelets 156. The heating unit 150 can then be lifted into the frame element 210 by means of the crane. When positioned within the frame element 210, the heating unit 150 is suspended on the shaft element 220 and the shaft element 220 is arranged at a corresponding position at the frame element 210. For this purpose, the shaft element 220 is inserted into the corresponding holes in the frame element and into the eyelets 155 provided at the outer surface of the heating unit 150. The shaft element 220 is fixed relative to the frame element 210 by means of the first fixing elements 250 and the heating unit 150 is fixed relative to the shaft element 220 by means of the second fixing elements 260. The load handling attachments of the crane are removed and the load of the heating unit 150 is transferred to the shaft element 220 and the frame element 210. The second fixing elements 260 can be opened, such that the heating unit 150 can rotate relative to the shaft element 220. The heating unit 150 then aligns itself according to tis centre of gravity. The heating unit 150 is then aligned relative to the furnace wall 110 by rotating the furnace component 150 around the shaft element 220. When the heating unit 150 is correspondingly aligned, the unit 150 is fixed relative to the shaft element 220 by means of the second fixing elements 260. The frame element 210 is then horizontally moved along the carrier elements 230 towards the furnace wall 110 until the heating unit 150 is arranged in the furnace wall 110. The heating unit 150 is then fixed to the furnace wall 110, e.g. by means of screws, bolts, brackets, flange connections, etc. The first and second fixing elements 250, 260 can be opened. The shaft element 220 is removed from the frame element 210 and from the heating unit 150. The carrier elements 230 can now be removed from the furnace wall 110, e.g. by means of the cart element. For this purpose, the frame element 210 can be moved horizontally away from the furnace wall 110. Then the frame element 210 can be removed from the at trolley elements 240, the trolley elements 240 can be removed from the carrier elements 230, and the carrier elements 230 can be removed from the furnace wall 110. It is also possible to remove the entire assembly of the carrier elements 230, the trolley element 240, and the frame element 210 from the wall 110 altogether.

The apparatus 200 can further be used for removing the heating unit 150 from the respective furnace wall 110 according to an embodiment of a method of the present invention. For this purpose, the carrier elements 230 are arranged at the furnace wall 110, e.g. by means of the cart element, the trolley elements 240 are arranged at the carrier elements 230, and the frame element 210 is fixed to the trolley elements 240. The frame element 210 is then moved horizontally towards the furnace wall 110 until the heating unit 150 is arranged within the frame 210. The shaft element 220 is arranged at the furnace component 150 and at the frame element 210. The shaft element 220 can be fixed relative to the frame element 210 and the heating unit 150 can be fixed relative to the shaft element 220 by means of first and second fixing elements 250, 260. The furnace component 150 is unfixed from the furnace wall 110, e.g. by unfastening respective the screws. The frame element 210 is moved horizontally away from the furnace wall 210 until the heating unit 150 is completely removed from the wall 110. The heating unit 150 can then be attached to a crane by means of the eyelets 156. The shaft element 220 is removed from the heating unit 150 and from the frame element 210. The heating unit 150 can then be removed from the frame element 210 by means of the crane. The carrier elements 230 can now be removed from the furnace wall 110. For this purpose, the frame element 210 can for example be removed from the trolley elements 240, the trolley elements 240 can be removed from the carrier elements 230, and then the carrier elements 230 can be removed from the furnace wall 110, e.g. by means of the cart element. The entire assembly of the carrier elements 230, the trolley element 240, and the frame element 210 can also be removed from the wall 110 altogether.

## Claims

1. An apparatus (200) for arranging a furnace component (150) in a wall (110) of a furnace (100) and/or for removing a furnace component (150) from a wall (110) of a furnace (100), comprising:
a frame element (210) configured to be moved relative to the wall (110) of the furnace (100), particularly towards the wall (110) and away from the wall (110), particularly in a horizontal direction, particularly in a direction perpendicular to an outer plane of the wall (110) of the furnace (100);
a shaft element (220) configured to be arranged at a number of predetermined positions at the frame element (210) such that the correspondingly arranged shaft element (220) can rotate around its axis, wherein the shaft element (220) is further configured to carry the furnace component (150) such that the furnace component (150) can rotate around the shaft element (220).

2. The apparatus (200) according to claim 1, further comprising at least one carrier element (230) and at least one trolley element (240), wherein the at least one carrier element (230) is configured to be arranged at or relative to the wall (110) of the furnace (100), wherein the at least one trolley element (240) is configured to be arranged at the at least one carrier element (230) such that the at least one trolley element (240) can be moved along the at least one carrier element (230), and wherein the frame element (210) is configured to be fixed to the at least one trolley element (240).

3. The apparatus (200) according to claim 2, further comprising a cart element,
wherein the cart element is configured to be moved relative to the wall (110) of the furnace (100), wherein the carrier element (230) is configured to be coupled with the cart element.

4. The apparatus (200) according to any one of the preceding claims, further comprising at least one first fixing element (250) configured to rotationally fix the shaft element (220) relative to the frame element (210) and/or at least one second fixing element (260) configured to rotationally fix the furnace component (150) relative to the shaft element (220).

5. The apparatus (200) according to claim 4, wherein the at least one first fixing element (250) and/or the at least one second first fixing element (260) comprises a nut and a lock-nut, and/or wherein the at least one first fixing element and/or the at least one second first fixing element comprises a clamp element.

6. The apparatus (200) according to any one of the preceding claims, wherein the shaft element (220) is configured to be coupled with suspension elements (155) provided at the furnace component (150) in order to carry the furnace component (150) such that the furnace component (150) can rotate around the shaft element (220).

7. The apparatus (200) according to any one of the preceding claims, configured to arrange and/or remove an electrical heating unit provided as the furnace component (150).

8. A method for arranging a furnace component (150) in a wall (110) of a furnace (100) by means of an apparatus (200) according to any one of the preceding claims, comprising the steps of:
arranging the furnace component (150) within the frame element (210);
suspending the furnace component (150) on the shaft element (220) and arranging the shaft element (220) at one of the number of predetermined positions at the frame element (210);
aligning the furnace component (150) relative to the wall (110) of the furnace (100) by rotating the furnace component (150) around the shaft element (220) and/or by rotating the shaft element (220) relative to the frame element (210);
moving the frame element (210) towards the wall (110) of the furnace (100) such that the furnace component (150) is arranged in the wall (110) of the furnace (100);
fixing the furnace component (150) to the wall (110) of the furnace (100);
removing the shaft element (220) from the frame element (210) and from the furnace component (150); and
removing the frame element (210) from the wall (110) of the furnace (100).

9. The method according to claim 8 when using an apparatus (200) according to claim 2, further comprising the following steps:
arranging the at least one carrier element (230) at or relative to the wall (110) of the furnace (100), arranging the at least one trolley element (240) at the at least one carrier element (230), and fixing the frame element (210) to the at least one trolley element (240) prior to the step of arranging the furnace component (150) within the frame element (210).

10. The method according to claim 8 or 9 when using an apparatus (200) according to claim 4, further comprising the following steps:
fixing the shaft element (220) relative to the frame element (210) by means of the at least one first fixing element (250) prior the step of aligning the furnace component (150) relative to the wall (110) of the furnace (100); and/or
fixing the furnace component (150) relative to the shaft element (220) by means of the at least one second fixing element (260) after the step of aligning the furnace component (150) relative to the wall (110) of the furnace (100).

11. A method for removing a furnace component (150) from a wall (110) of a furnace (100) by means of an apparatus (200) according to any one of the claims 1 to 7, comprising the steps of:
moving the frame element (210) towards the wall (110) of the furnace (100) such that the furnace component (150) is arranged within the or relative to the frame element (210);
arranging the shaft element (220) at the furnace component (150) and arranging the shaft element (220) at one of the number of predetermined positions at the frame element (210);
unfixing the furnace component (150) from the wall (110) of the furnace (100);
removing the frame element (210) from the wall (210) of the furnace (100);
removing the shaft element (220) from the furnace component (150) and from the frame element (210); and
removing the furnace component (150) from the frame element (210).

12. The method according to claim 11 when using an apparatus (200) according to claim 2, further comprising the following steps:
arranging the at least one carrier element (230) at or relative to the wall (110) of the furnace (100), arranging the at least one trolley element (240) at the at least one carrier element (230), and fixing the frame element (210) to the at least one trolley element (240) prior to the step of moving the frame element (210) towards the wall (110) of the furnace (100).

13. The method according to claim 11 or 12 when using an apparatus (200) according to claim 4, further comprising the following steps:
fixing the shaft element (220) relative to the frame element (210) by means of the at least one first fixing element (250) and/or fixing the furnace component (150) relative to the shaft element (220) by means of the at least one second fixing element (260) prior to the step of unfixing the furnace component (150) from the wall (110) of the furnace (110).
